# EUROPÄISCHE PATENTSCHRIFT

(11) **EP 1 105 327 B1**
(45) Veröffentlichungstag und Bekanntmachung des Hinweises auf die Patenterteilung: **13.11.2002**
(21) Anmeldenummer: 99950488.9
(22) Anmeldetag: 03.08.1999
(51) Int. Cl.: B65G 47/29

(54) **ANORDNUNG ZUR VEREINZELUNG VON NEBENEINANDERLIEGENDEN PAKETEN**
ARRAY FOR INDIVIDUALIZING CONTIGUOUS PACKAGES
ENSEMBLE POUR L'INDIVIDUALISATION DE PAQUETS JUXTAPOSES

(30) Priorität: 13.08.1998 DE 19836764
(43) Veröffentlichungstag der Anmeldung: 13.06.2001
(73) Patentinhaber: SIEMENS AKTIENGESELLSCHAFT, 80333 München (DE)
(72) Erfinder: GRUND, Hans-Joachim, D-91056 Erlangen (DE)
(86) Internationale Anmeldenummer: DE9902376
(87) Internationale Veröffentlichungsnummer: WO00009428

(56) Entgegenhaltungen:
- US-A- 4 120 393
- US-A- 4 925 005

## Beschreibung

Die Erfindung betrifft eine Anordnung zur Vereinzelung von nebeneinanderliegenden Paketen, die mittels Transportmitteln zu- und abgeführt werden. Die Pakete werden ungeordnet nebeneinanderliegend zugeführt, wobei durch eine Vorverarbeitung sichergestellt ist, daß keine Pakete übereinanderliegen. Unter Paketen werden hier auch Päckchen, Bündel von Zeitschriften und sackartige Sendungen verstanden. Nach der Vereinzelung werden die Pakete nacheinander einer weiteren Bearbeitung zugeführt. Dies kann das Eingangsteil einer Sortieranlage sein, in der die Pakete nach verschiedenen Kriterien (z.B. Empfängeradresse, Farbe, Größe) sortiert werden.

Gemäß der EP 780 328 A1 wurde eine entsprechende Vereinzelungseinrichtung bekannt, die hintereinander angeordnete Sektionen mit angetriebenen, schräg zu einer Leitwand ausgerichteten Rollen aufweist. Die Geschwindigkeiten der Rollen steigen von Sektion zu Sektion, um Zwischenräume zwischen den Paketen zu erzeugen. Dabei wird der Transportpfad für die Pakete von Sektion zu Sektion schmaler, damit nur einzelne Pakete die Einrichtung verlassen. Die Pakete, die in den Sektionen über die offenen Seiten ausgesondert werden, gelangen über einen Rückführungspfad wieder auf den Transportpfad mit den Sektionen. Diese Lösung benötigt viel Platz, insbesondere in der Länge und garantiert bei unterschiedlich großen Paketen keine sichere Vereinzelung, da zwei nebeneinanderliegende schmale Pakete den Vereinzeler passieren können.

In der US 56 38 938 wird eine weitere Vereinzelungseinrichtung für Pakete beschrieben, bei der mehrere jeweils separat angetriebene ansteigende Transportbänder hintereinander angeordnet sind, wobei die Pakete vom oberen Teil des vorherigen Bandes auf den unteren Teil des nächsten Bandes fallen. Zwischen den Bändern sind Lichtschranken angeordnet. Befinden sich Pakete innerhalb einer Lichtschranke, so wird der Antrieb des jeweils vorgelagerten Bandes ausgeschaltet. Dadurch wird der Paketpulk in Transportrichtung auseinandergezogen. Da es hierbei aber möglich ist, daß Pakete nebeneinanderliegen, sind noch Finger vorgesehen, die gesteuert durch die Signale eines quer zur Transportrichtung angeordneten optischen Zeilensensors nur ein Paket von mehreren nebeneinanderliegenden Paketen durchlassen. Diese Lösung benötigt ebenfalls eine große Baulänge und eine sichere Funktion auch bei Paketen stark unterschiedlicher Größe (insbesondere bei den Fingern) ist nicht gewährleistet.

Der in Anspruch 1 angegebenen Erfindung liegt deshalb die Aufgabe zugrunde, eine möglichst kompakte Anordnung zur Vereinzelung von nebeneinanderliegenden Paketen zu schaffen, deren Funktion unabhängig von der Größe der Pakete ist.

Die arrayförmige Anordnung von Hubmechanismen, zwischen denen sich Transportbänder befinden und die gezielte Betätigung der Hubmechanismen und Antrieb auf der Basis der detektierten Pakete in den beschriebenen Zeitabläufen erlaubt eine sehr kompakte Bauweise und eine sichere Vereinzelung der Pakete unterschiedlicher Größe, wobei die Abstände der Hubmechanismen so gewählt sind, daß die Pakete mit einer festgelegten Mindestgröße sicher vereinzelt werden.

In den Unteransprüchen sind vorteilhafte Ausgestaltungen dargestellt.

Wurden gemäß Anspruch 2 Hubmagnete als günstige Ausführung für die Hubmechanismen gewählt, so ist die im Anspruch 3 dargestellte Lösung besonders vorteilhaft, da durch das Anheben und Absenken aller Hubmagnete oder das Absenken und Anheben der Transportbänder mittels Verstellmechanismus die Stößel der Hubmagnete belastungsfrei in die obere Endstellung bewegt werden können. Da zum Halten in der oberen Stellung auch mit Last nur ein geringer Haltestrom notwendig ist, kann der Strombedarf der Hubmagnete gering gehalten werden.
Bei einem Einsatz von pneumatischen oder hydraulischen Hubzylindern als günstige Ausführung der Hubmechanismen gemäß Anspruch 4 ist in der vorteilhaften Ausgestaltung nach Anspruch 5 eine zentrale Verstellung der Hubzylinder oder Transportbänder nicht notwendig, da ihre Stößel auch unter Last hochbewegt werden können.

Vorteilhaft ist es gemäß Anspruch 6, die Abwärtsbewegung der Stößel zu dämpfen, so daß bei der Abwärtsbewegung der Stößel der Kontakt mit den Paketen nicht verloren geht und ein Verrutschen der Pakete weitgehend vermieden wird. Diese Dämpfung kann bei den Hubmagneten mittels Induktion oder Wirbelstrom und bei den Hubzylindern über Zusatzventile erreicht werden. Um auch aneinanderliegende Pakete sicher zu identifizieren, sind vorteilhaft gemäß Anspruch 7 zusätzlich das Höhenprofil aufnehmende Meßmittel vorgesehen. Diese Messungen können z.B. mittels Laser-Trioregulation durchgeführt werden.

Gemäß Anspruch 8 ist in einer weiteren vorteilhaften Ausführung zur besseren Identifizierung auch aneinanderliegender Pakete eine Farbbildaufnahmeeinrichtung vorgesehen, die neben den oder statt der die belegten Flächen aufnehmenden Meßmittel eingesetzt wird.

In der vorteilhaften Ausgestaltung nach Anspruch 9 ist zur Ermittlung der Umrisse der Pakete vor den Transportbändern und Hubmechanismen quer zur Transportrichtung unterhalb der Transportebene eine optische Sensorzeile vorgesehen. Da die Pakete über die Sensorzeile hinwegtransportiert werden, sind mithilfe eines Schrittgebers für den zurückgelegten Weg und der Steuereinrichtung die belegten Flächen einfach zu ermitteln.
Die belegten Flächen/Umrisse können auch einfach und sicher festgestellt werden, wenn gemäß Anspruch 10 die Hubmechanismen mit Sensoren ausgerüstet sind, die die Belastung der Stößel mit einem Mindestgewicht detektieren.

Weiterhin ist es vorteilhaft, nach Anspruch 11 bei der Notwendigkeit des Ausrichtens der Pakete die Stößel unter einem festgelegten Drehpunkt später als die übrigen Stößel unter dem jeweiligen Paket abzusenken, so daß die Pakete in dieser Zeit durch die Transportbänder um diesen Punkt gedreht werden.

Nachfolgend wird die Erfindung in einem Ausführungsbeispiel anhand der Zeichnungen näher erläutert.
Dabei zeigen
- FIG 1: eine schematische blockbildartige Darstellung der Vereinzelungsanordnung mit einer Draufsicht auf die Hubmechanismen und Transportbänder
- FIG 2 a-c: schematische Seitenansichten der Vereinzelungsanordnung mit Hubmagneten in 3 Vereinzelungsphasen
- FIG 3 a-c: schematische Seitenansichten der Vereinzelungsanordnung mit pneumatischen oder hydraulischen Hubzylindern in 3 Vereinzelungsphasen
- FIG 4: eine schematische Seitenansicht der Vereinzelungsanordnung mit einem Meßmittel zur Höhenmessung
- FIG 5: eine schematische Seitenansicht der Vereinzelungsanordnung mit einer Farbkamera
- FIG 6 a, b: eine schematische Seitenansicht der Vereinzelungsanordnung mit druckaufnehmenden Hubmechanismen
- FIG 7: eine schematische Draufsicht auf eine Vereinzelungsanordnung beim Drehen eines Paketes
- FIG 8: eine schematische Draufsicht auf eine Vereinzelungsanordnung mit Paketen zur Erläuterung der Abzugsreihenfolge

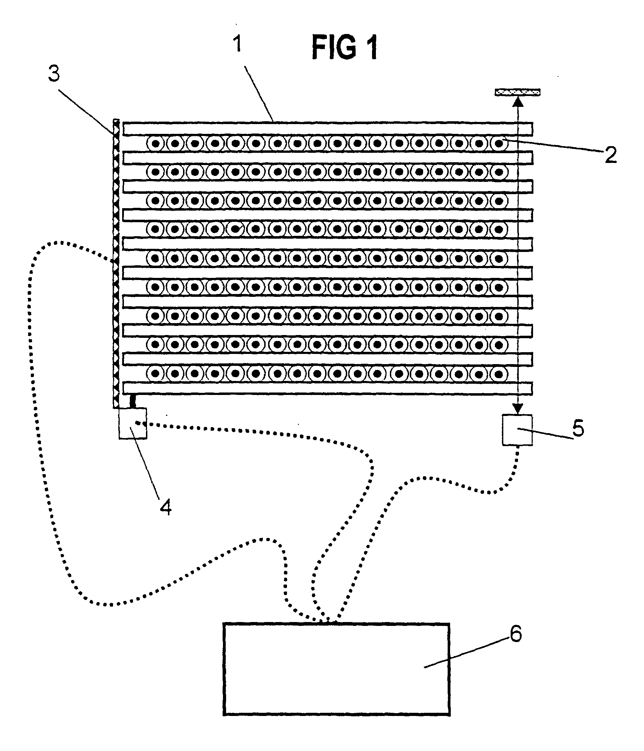

Die Vereinzelungsanordnung wandelt den über ein Transportmittel antransportierten ungeordneten Stoffstrom in einen sequentiellen um. Beim Eintritt in die Vereinzelungsanordnung liegen die Pakete nebeneinander. Sie verlassen die Vereinzelungsanordnung hintereinander in einem definierten Abstand. Wie aus der FIG 1 zu erkennen, sind in Transportrichtung hintereinander Hubmechanismen 2 angeordnet. Zwischen Reihen von Hubmechanismen befinden sich schmale Transportbänder 1. Die Pakete werden von links nach rechts transportiert. Wenn die Pakete das Ende der Vereinzelungsanordnung erreicht haben, gibt eine Lichtschranke 5 als Meßmittel zum Detektieren von Paketen am Ende der Transportbänder ein Signal und der Antrieb der Transportbänder 1 wird über eine Steuereinrichtung 6 gestoppt.
Für eine gezielte Vereinzelung ist es notwendig, die Lage und die Grundrisse der Pakete zu erkennen. Hierfür ist gemäß der FIG 1 als Beispiel direkt vor den Transportbändern eine senkrecht zur Transportrichtung verlaufende optische Sensorzeile 3 vorgesehen, die sich unterhalb der Transportebene der Transportbänder 1 befindet. Die darüber hinweg bewegten Pakete deaktivieren die von oben permanent beleuchteten Photozellen der optischen Sensorzeile 3. Das Muster aus aktivierten und deaktivierten Photozellen wird zusammen mit der aktuellen Position, gemessen mit einem Schrittgeber 4, an die Steuereinrichtung 6 übertragen. Der Schrittgeber 6 ist mit dem Antrieb der Transportbänder 1 verbunden.

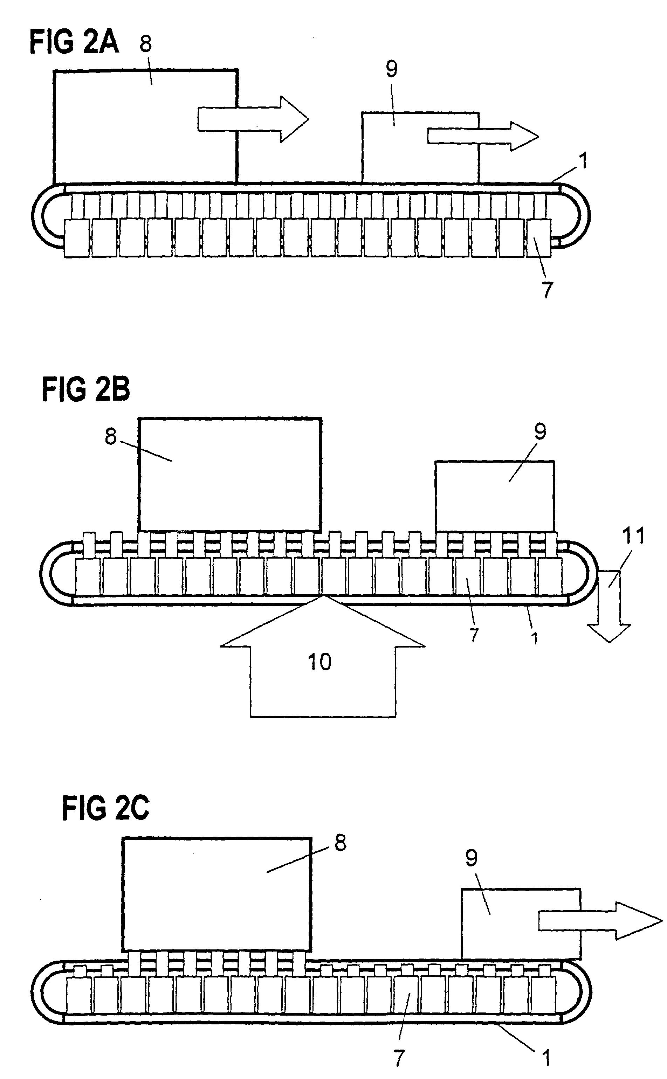

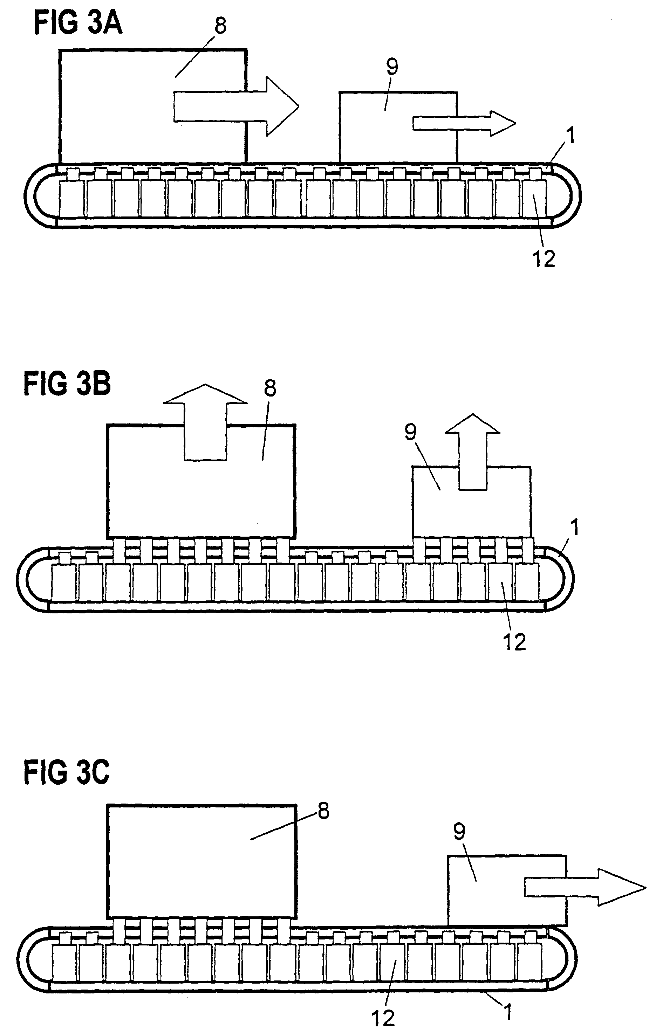

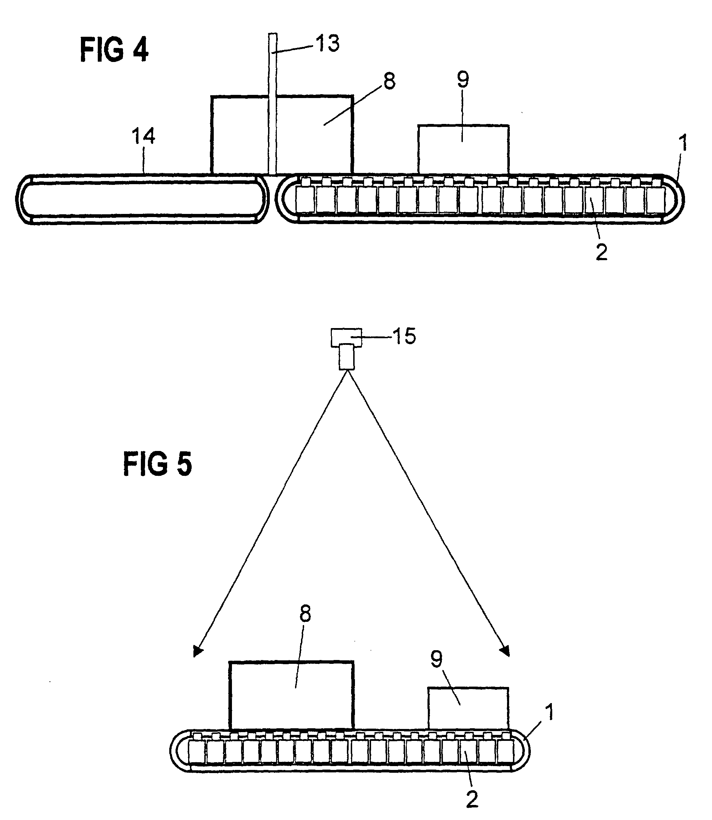

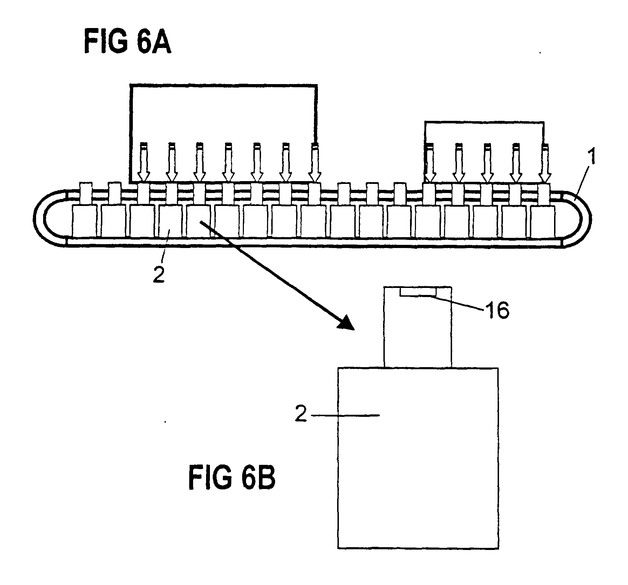

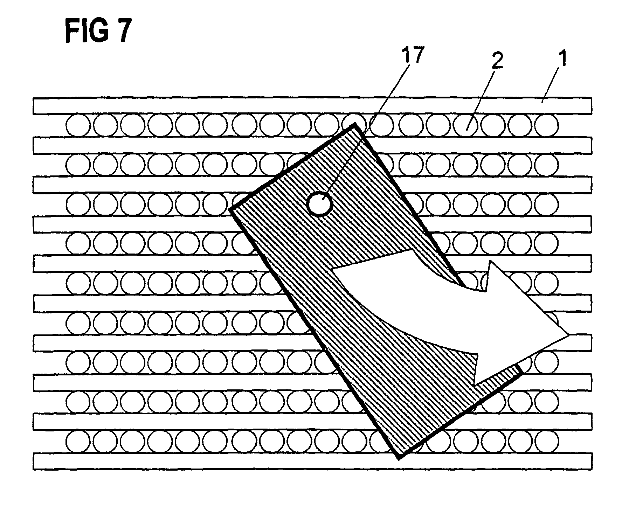

Nach dem Stoppen des Antriebes der Transportbänder 1 wird in der Steuereinrichtung 6 aus den Informationen der Sensorzeile 3 und des Schrittgebers 4 ein Abbild von der Bedeckung der Vereinzelungsanordnung mit Paketen gebildet. In den weiteren Figuren ist die Funktionsweise näher erläutert. In den schematischen Seitenansichten der FIG 2a-c ist der Vereinzelungsvorgang bei Verwendung von Hubmagneten 7 erläutert.
Wie in FIG 2a dargestellt, befinden sich auf den Transportbändern 1 zwei Pakete 8,9 und werden durch die Transportbänder 1, wie mit den Pfeilen angedeutet, von links nach rechts transportiert. Die Stößel der Hubmagnete 7 befinden sich im ausgefahrenen Zustand unterhalb der Transportebene der Transportbänder. Die Stößel sind schon ausgefahren, weil nur ein geringer Strombedarf zum Halten der Stößel (auch unter Last) gegenüber dem Hochfahren der Stößel unter Last notwendig ist. Ist das vorderste Paket 9 am Ende der Transportbänder 1 angekommen, werden diese gestoppt. Dann werden über einen nicht dargestellten Verstellmechanismus 10 alle Hubmagnete 7 angehoben oder die Transportbänder 1 durch einen nicht dargestellten Verstellmechanismus 11 abgesenkt, so daß sich die Pakete oberhalb der Transportbänder 1 auf den Stößeln befinden (FIG 2b). Die Transportbänder 1 werden nun wieder in Bewegung gesetzt. Danach werden die Stößel unter dem vordersten Paket 9 und die übrigen Stößel, die kein Paket tragen, abgesenkt. Damit befindet sich das vorderste Paket 9 auf den Transportbändern 1 und es wird wie durch den Pfeil angedeutet, abtransportiert (FIG 2c). Die nicht mit Paketen 8,9 bedeckten Stößel werden am Anfang ebenfalls abgesenkt, damit die Pakete ohne Hindernisse die Vereinzelungsanordnung verlassen können. Danach werden die Pakete sukzessive, in diesem Fall nur Paket 8, abtransportiert. In den FIG 3a-c wird der Vereinzelungsvorgang bei Verwendung von pneumatischen oder hydraulischen Hubzylindern 12 dargestellt. Da in diesem Fall die Stößel unter Last hochgefahren werden können, ist eine Höhenverstellung der Hubzylinder 12 oder der Transportbänder 1 nicht notwendig. Gemäß FIG 3a befinden sich die Stößel in der unteren Endstellung unterhalb der Transportebene der Transportbänder 1 und die Pakete 8,9 werden durch die Transportbänder 1 nach rechts transportiert. Nach dem Abstoppen der Transportbänder 1 (vorderstes Paket 9 am Ende der Transportbänder 1 angelangt) werden die Stößel unter den Paketen 8,9 in die obere Endstellung oberhalb der Transportebene der Transportbänder 1 gefahren (FIG 3b). Nachdem die Transportbänder 1 wieder in Gang gesetzt wurden, werden die Stößel zuerst unter dem Paket 9 und dann unter dem Paket 8 abgesenkt, so daß die Pakete 8,9 nacheinander abtransportiert werden (FIG 3c). Um unkontrollierte Bewegungen der Pakete beim Absenken der Stößel der Hubmechanismen zu vermeiden, können die Absenkbewegungen auch gedämpft ausgeführt werden. Da es vorkommen kann, daß Pakete direkt aneinanderliegen, reichen die Informationen über die optische Sensorzeile 3 und den Schrittgeber 4 nicht aus, diesen Zustand zu erkennen. Aus diesem Grunde ist, wie in FIG 4 dargestellt, eine Höhenmeßeinrichtung 13, in diesem Fall eine optische Sensorzeile zwischen dem zuführenden Transportmittel 14 (Unterflurband) und den Transportbändern 1 vorgesehen. Mit dieser zusätzlichen Höheninformation ist eine Erkennung von aneinanderliegenden Paketen möglich.
Eine weitere oder zusätzliche Möglichkeit zur Unterscheidung der Pakete ist die Farbaufnahme der Paketoberflächen mittels Farbbildaufnahmeeinrichtung 15 (FIG 5). Zur Ermittlung der Grundfläche der Pakete 8,9 können die Hubmechanismen 2, wie in FIG 6a und 6b dargestellt, in einer weiteren Variante mit druckaufnehmenden Mitteln 16 ausgerüstet werden. Sollen insbesondere größere Pakete in eine ausgerichtete Lage gebracht werden, so wird der Stößel eines Hubmechanismus 17 unterhalb des jeweiligen Paketes später abgesenkt, so daß das Paket durch die Transportbänder 1 um diesen Stößel als Drehpunkt gedreht wird (FIG 7).

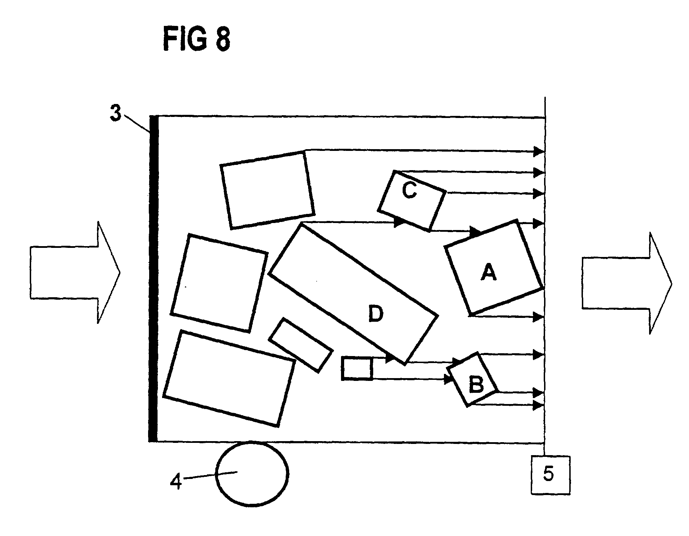

In der FIG 8 wird der Vereinzelungsalgorithmus anschaulich dargestellt. In der Draufsicht sind die Pakete mit ihren Umrissen auf der Vereinzelungsanordnung zu erkennen.
Nachdem Lagen und Umrisse der Pakete mithilfe bekannter Erkennungsalgorithmen unter Verwendung von Bildbearbeitungsalgorithmen auf der Basis der aufgenommenen Daten der verschiedenen Meßmittel ermittelt wurden und in der Steuereinrichtung 6 gespeichert sind, wird die Reihenfolge des Abtransportes festgelegt. Dabei darf der Transport des jeweiligen Paketes nicht durch ein anderes Paket behindert werden. Bestehen mehrere Möglichkeiten, so wird in diesem Beispiel das dem Ausgang am nächsten liegende Paket zuerst abtransportiert. Entsprechend dieser Regeln wird zuerst Paket A, dann Paket B, dann Paket C, dann Paket D usw. vereinzelt.

## Patentansprüche

1. Anordnung zur Vereinzelung von nebeneinanderliegenden Paketen, die mittels Transportmittel zu- und abgeführt werden, **gekennzeichnet durch** folgende Mittel:
- mehrere Reihen in Transportrichtung hintereinander angeordneter Hubmechanismen (2), zwischen denen sich schmale, endlose Transportbänder (1) befinden,
- Meßmittel (5) zum Detektieren von Paketen am Ende der Transportbänder (1),
- Meßmittel (3,4) zum Ermitteln der Lage und Umrisse der Pakete am Ende der Zuführphase, bei der das oder die vordersten Pakete das Ende der Transportbänder (1) erreicht haben,
- eine Steuereinrichtung (6), die in Verbindung mit den Meßmitteln folgenden Ablauf gewährleistet:
• Zuführen der Pakete **durch** das zuführende Transportmittel (14) und die Transportbänder (1) solange, bis das oder die vordersten Pakete (9) das Ende der Transportbänder (1) erreicht haben, wobei die Transportebene der Transportbänder (1) über den Stößeln der Hubmechanismen (2) liegt,
• Bewegen der Transportbänder (1) nach unten oder Bewegen und/oder Betätigen der Hubmechanismen (2) in derart, daß mindestens die Stößel in ihrer oberen Endstellung über der Transportebene der Transportbänder (1) sind, auf denen sich Pakete (8,9) befinden,
• In Bewegung setzen der Transportbänder (1) und des Transportmittels zum Abtransport der Pakete (8,9),
• Absenken der Stößel der Hubmechanismen derart in die unteren Endstellungen, daß nacheinander nur jeweils eines der Pakete **durch** die Transportbänder (1) abtransportiert wird, welches beim Abtransport **durch** die anderen Pakete nicht behindert wird,
• Beginn eines weiteren Zuführzyklus mit oder nach Abtransport des letzten Paketes und Vereinzelung der zugeführten Pakete.

2. Anordnung nach Anspruch 1, **dadurch gekennzeichnet, daß** die Hubmechanismen (2) aus Hubmagneten (7) bestehen.

3. Anordnung nach Anspruch 1 und 2, **dadurch gekennzeichnet, daß** sich beim Zuführen der Pakete (8,9) die Stößel der Hubmagnete (7) in der oberen Endstellung befinden, nach Beendigung der Zuführphase alle Hubmagnete (7) mittels Verstellmechanismus so angehoben werden oder die Transportbänder (1) so abgesenkt werden, daß sich die Stößel über der Transportebene der Transportbänder (1) befinden, daß bei der Vereinzelung des ersten Paketes (9) zusätzlich alle Stößel, auf denen sich keine Pakete befinden, abgesenkt werden, und daß nach Beendigung der Vereinzelung die Hubmagnete (7) mittels des Verstellmechanismus wieder abgesenkt werden oder die Transportbänder (1) wieder angehoben werden und alle Stößel der Hubmagnete (7) wieder in die obere Endstellung bewegt werden.

4. Anordnung nach Anspruch 1, **dadurch gekennzeichnet, daß** die Hubmechanismen aus pneumatischen oder hydraulischen Hubzylindern (12) bestehen.

5. Anordnung nach Anspruch 1 und 4, **dadurch gekennzeichnet, daß** sich beim Zuführen der Pakete (8,9) die Stößel der Hubzylinder (12) in der unteren Endstellung befinden, nach Beendigung der Zuführphase die Stößel derjenigen Hubzylinder (12) in die obere Endstellung über der Transportebene der Transportbänder (1) bewegt werden, über denen sich Pakete (8,9) befinden.

6. Anordnung nach einem der Ansprüche 1 bis 5, **dadurch gekennzeichnet, daß** die Hubmechanismen (2) Dämpfungsglieder zum Dämpfen der Abwärtsbewegung besitzen.

7. Anordnung nach Anspruch 1, **dadurch gekennzeichnet, daß** zur Ermittlung der Lage und Umrisse der einzelnen Pakete (8,9) zum Zeitpunkt der Beendigung der Zuführphase neben den die belegten Flächen aufnehmenden Meßmitteln das Höhenprofil der Pakete aufnehmende Meßmittel (13) vorgesehen sind.

8. Anordnung nach Anspruch 1, **dadurch gekennzeichnet, daß** zur Ermittlung der Lage und Umrisse der einzelnen Pakete (8,9) zum Zeitpunkt der Beendigung der Zuführphase die belegte Flächen aufnehmende Meßmittel (3,4) und/oder eine Farbbildaufnahmeeinrichtung (15) vorgesehen ist.

9. Anordnung nach Anspruch 1 und 7, **dadurch gekennzeichnet, daß** vor den Transportbändern (1) und Hubmechanismen (2) quer zur Transportrichtung unterhalb der Transportebene eine optische Sensorzeile (3) sowie ein Schrittgeber (4) zur Ermittlung des zurückgelegten Weges der Transportbänder (1) vorgesehen sind, aus deren Signalen mittels der Steuereinrichtung (6) Lage und die Umrisse der Pakete zum Zeitpunkt des Abstoppens der Transportbänder (1) ermittelt werden.

10. Anordnung nach Anspruch 1 und 7, **dadurch gekennzeichnet, daß** zur Ermittlung der belegten Flächen/Umrisse zum Zeitpunkt der Beendigung der Zuführphase die Hubmechanismen (2) mit Sensoren (16) ausgerüstet sind, die die Belastung der Stößel mit einem bestimmten Gewicht detektieren.

11. Anordnung nach Anspruch 1, **dadurch gekennzeichnet, daß** die Steuereinrichtung (6) so ausgebildet ist, daß zum Ausrichten der Pakete bei der Vereinzelung die Stößel der Hubmechanismen (17) unter einem festgelegten Drehpunkt des jeweiligen Paketes später als die anderen Stößel, auf denen das Paket liegt, abgesenkt werden.

## Claims

1. Arrangement for separating packages which are located one beside the other and are fed and guided away by transporting means, **characterized by** the following means:
- a plurality of rows of lifting mechanisms (2) which are arranged one behind the other in the transporting direction and between which narrow, endless transporting belts (1) are located,
- measuring means (5) for detecting packages at the end of the transporting belts (1),
- measuring means (3, 4) for determining the position and outlines of the packages at the end of the feed phase, when the foremost package or packages has/have reached the end of the transporting belts (1),
- a control device (6) which, in conjunction with the measuring means, ensures the following procedure:
• feeding the packages by way of the feeding transporting means (14) and the transporting belts (1) until the foremost package or packages (9) has/have reached the end of the transporting belts (1), the transporting plane of the transporting belts (1) being located above the push rods of the lifting mechanisms (2),
• moving the transporting belts (1) downwards or moving and/or actuating the lifting mechanisms (2) such that at least the push rods in their top end position are above the transporting plane of the transporting belts (1) on which the packages (8, 9) are located,
• starting up the transporting belts (1) and the transporting means for transporting the packages (8, 9) away,
• lowering the push rods of the lifting mechanisms into the bottom end positions such that, one after the other, only in each case one of the packages is transported away by the transporting belts (1), said one package not being obstructed by the other packages as it is transported away,
• beginning a further feed cycle during or after removal of the last package and separation of the packages fed.

2. Arrangement according to Claim 1, **characterized in that** the lifting mechanisms (2) comprise lifting magnets (7).

3. Arrangement according to Claims 1 and 2, **characterized in that**, as the packages (8, 9) are fed, the push rods of the lifting magnets (7) are located in the top end position and, after completion of the feed phase, all of the lifting magnets (7) are raised by means of an adjusting mechanism, or the transporting belts (1) are lowered, such that the push rods are located above the transporting plane of the transporting belts (1), **in that**, during separation of the first package (9), in addition all the push rods on which no packages are located are lowered, and **in that**, after completion of the separating operation, the lifting magnets (7) are lowered again by means of the adjusting mechanism or the transporting belts (1) are raised again and all of the push rods of the lifting magnets (7) are moved into the top end position again.

4. Arrangement according to Claim 1, **characterized in that** the lifting mechanisms comprise pneumatic or hydraulic lifting cylinders (12).

5. Arrangement according to Claims 1 and 4, **characterized in that**, as the packages (8, 9) are fed, the push rods of the lifting cylinders (12) are located in the bottom end position and, after completion of the feed phase, the push rods of those lifting cylinders (12) above which packages (8, 9) are located are moved into the top end position above the transporting plane of the transporting belts (1).

6. Arrangement according to one of Claims 1 to 5, **characterized in that** the lifting mechanisms (2) have damping members for damping the downward movement.

7. Arrangement according to Claim 1, **characterized in that**, in order to determine the position and outlines of the individual packages (8, 9) at the point in time of completion of the feed phase, measuring means (13) which pick up the height profile of the packages are provided alongside the measuring means which pick up the occupied surfaces.

8. Arrangement according to Claim 1, **characterized in that**, in order to determine the position and outlines of the individual packages (8, 9) at the point in time of the completion of the feed phase, measuring means (3, 4) which pick up the occupied surfaces and/or an image recording device (15) are/is provided.

9. Arrangement according to Claims 1 and 7, **characterized in that** provided upstream of the transporting belts (1) and lifting mechanisms (2), in a direction transverse to the transporting direction, beneath the transporting plane is a line of optical sensors (3) and an incremental transmitter (4) for transmitting the distance covered by the transporting belts (1), from the signals of which, by means of the control device (6), the position and the outlines of the packages at the point in time when the transporting belts (1) are stopped are determined.

10. Arrangement according to Claims 1 and 7, **characterized in that**, in order to determine the occupied surfaces/outlines at the point in time of the completion of the feed phase, the lifting mechanisms (2) are equipped with sensors (16) which detect the loading of the push rods by a certain weight.

11. Arrangement according to Claim 1, **characterized in that** the control device (6) is designed such that, for alignment of the packages during separation, the push rods of the lifting mechanisms (17) are lowered beneath a defined point of rotation of the respective package at a later stage than the other push rods on which the package is located.

## Revendications

1. Appareil pour isoler des paquets disposés côte à côte, qui sont amenés et emmenés à l'aide d'un moyen de transport, **caractérisé par** les moyens suivants :
- plusieurs séries de mécanismes de levage (2), disposés les uns derrières les autres par référence au sens de transport, entre lesquels se trouvent d'étroites bandes transporteuses sans fin (1),
- des moyens de mesure (5) pour détecter des paquets à l'extrémité des bandes transporteuses (1)
- des moyens de mesure (3, 4) pour déterminer la position et le contour des paquets à la fin de la phase d'amenée lorsque le ou les premiers paquets ont atteint l'extrémité des bandes transporteuses (1),
- un dispositif de commande (6) qui garantit le déroulement suivant en liaison avec les moyens de mesure :
• l'amenée des paquets par le moyen d'amenée (14) et les bandes transporteuses (1) jusqu'à ce que le ou les paquets (9) qui se trouvent le plus en avant aient atteint l'extrémité des bandes transporteuses (1), le plan de transport des bandes transporteuses (1) se trouvant au-dessus des coulisseaux des mécanismes de levage (2),
• le déplacement des bandes transporteuses (1) vers le bas ou le déplacement et/ou l'actionnement des mécanismes de levage (2) de telle façon que au moins les coulisseaux soient dans leur position de fin de course supérieure au-dessus du plan de transport des bandes transporteuses (1) sur lesquelles se trouvent les paquets (8, 9),
• la mise en mouvement des bandes transporteuses (1) et du moyen de transport pour emmener les paquets (8, 9),
• l'abaissement des coulisseaux des mécanismes de levage dans la position de fin course inférieure de telle façon qu'un seul paquet est à chaque fois emmené par les bandes transporteuses (1) successivement, lequel paquet n'est pas gêné par les autres paquets lorsqu'il est emmené,
• le début d'un autre cycle d'amenée lorsque ou après que le dernier paquet a été emmené ou que les paquets amenés ont été isolés.

2. Appareil selon la revendication 1, **caractérisé en ce que** les mécanismes de levage (2) se composent d'électroaimants de levage (7).

3. Appareil selon les revendications 1 et 2, **caractérisé en ce que** les coulisseaux des électroaimants de levage se trouvent dans leur position de fin de course supérieure lorsque les paquets (8, 9) sont amenés et tous les électroaimants (7) sont soulevés au moyen du mécanisme de déplacement, ou les bandes transporteuses (1) sont abaissées, lorsque la phase d'amenée est terminée, de sorte que les coulisseaux se trouvent au-dessus du plan de transport des bandes transporteuses (1), que tous les coulisseaux sur lesquels il n'y a pas de paquet sont abaissés lorsque le premier paquet (9) est isolé, et que à la fin de l'isolement les électroaimants (7) sont de nouveau abaissés au moyen du mécanisme de déplacement, ou les bandes transporteuses (1) sont de nouveau soulevées, et tous les coulisseaux (7) sont de nouveau mis dans la position de fin de course supérieure.

4. Appareil selon la revendication 1, **caractérisé en ce que** les mécanismes de levage se composent de vérins de levage (12) pneumatiques ou hydrauliques.

5. Appareil selon les revendications 1 et 4, **caractérisé en ce que** les coulisseaux des vérins de levage (12) se trouvent dans la position de fin de course inférieure lorsque les paquets sont amenés (8, 9) et les coulisseaux de ces vérins de levage (12) sont mis à la fin de la phase d'amenée dans la position de fin de course supérieure au-dessus du plan de transport des bandes transporteuses (1) où se trouvent les paquets (8, 9).

6. Appareil selon l'une des revendications 1 à 5, **caractérisé en ce que** les mécanismes de levage (2) possèdent des éléments d'amortissement pour amortir le mouvement vers le bas.

7. Appareil selon la revendication 1, **caractérisé en ce que**, outre les moyens de mesure détectant les surfaces occupées, des moyens de mesure (13) déterminant le profil en hauteur des paquets sont prévus pour déterminer la position et le contour des paquets individuels (8, 9) à la fin de la phase d'amenée.

8. Appareil selon la revendication 1, **caractérisé en ce que** les moyens de mesure (3, 4) détectant les surfaces occupées et/ou un dispositif de détection d'une image en couleur (15) sont prévus pour déterminer la position et le contour des paquets individuels (8, 9) à la fin de la phase d'amenée.

9. Appareil selon les revendications 1 et 7, **caractérisé en ce que**, en avant des bandes transporteuses (1) et des mécanismes de levage (2) transversalement à la direction de transport et au-dessous du plan de transport, il est prévu une barrette de capteurs optiques (3) ainsi qu'un générateur d'impulsions (4) pour déterminer la distance parcourue par les bandes transporteuses (1) qui génèrent des signaux à partir desquels la position et le contour des paquets sont déterminés au moyen du dispositif de commande (6) au moment de l'arrêt des bandes transporteuses (1).

10. Appareil selon les revendications 1 et 7, **caractérisé en ce que** les mécanismes de levage (2) sont dotés de capteurs qui détectent la charge des coulisseaux avec un poids déterminé en vue de déterminer les surfaces occupées ou le contour à la fin de la phase d'amenée.

11. Appareil selon la revendication 1, **caractérisé en ce que** le dispositif de commande (6) est conformé de telle façon que les coulisseaux des mécanismes de levage (17) sont abaissés sous un point de rotation déterminé du paquet correspondant après les autres coulisseaux sur lesquels se trouve le paquet en vue d'orienter les paquets lorsqu'ils sont isolés.
